Europäisches Patentamt

European Patent Office

Office européen des brevets

(11) Numéro de publication: **0 217 710**
**A1**

## (12) DEMANDE DE BREVET EUROPEEN

(21) Numéro de dépôt: **86402073.0**

(22) Date de dépôt: **22.09.86**

(51) Int. Cl.⁴: **G 01 K 1/14**
G 01 N 1/12, C 21 C 5/46

(30) Priorité: **24.09.85 FR 8514111**

(43) Date de publication de la demande:
**08.04.87 Bulletin 87/15**

(84) Etats contractants désignés: **AT DE GB IT**

(71) Demandeur: **FIVES-CAIL BABCOCK, Société anonyme
7 rue Montalivet
F-75383 Paris Cedex 08 (FR)**

(72) Inventeur: **Menu, Edouard
44 avenue de la Résistance
F-77500 Chelles (FR)**

(74) Mandataire: **Fontanié, Etienne
FIVES-CAIL BABCOCK 7, rue Montalivet
F-75383 Paris Cedex 08 (FR)**

(54) **Dispositif de mesure de la température et/ou de prélèvement d'échantillons d'un bain d'acier liquide.**

(57) Dispositif de mesure de la température et/ou de prélèvement d'échantillons d'un bain d'acier liquide dans la cornue (10) d'un convertisseur constitué par une cartouche (24) fixée à l'extrémité inférieure d'une perche (22) apte à être introduite verticalement dans le bain par l'ouverture de la cornue.

Pour permettre son utilisation dans une installation où la hauteur disponible au-dessus de la cornue est limitée, la perche (22) est fixée par son extrémité supérieure à une chaîne Galle (26) dont les maillons sont munis de butées qui n'autorisent la chaîne qu'à fléchir dans un sens lorsqu'elle est rectiligne, en ce que la perche est fixée en porte-à-faux au dernier maillon de la chaîne, en ce que la perche et la chaîne sont suspendues à un pignon (28) à axe horizontal sur lequel passe la chaîne et qui peut être entraîné en rotation par un moteur (40), et en ce que des éléments de guidage interdisant tout déplacement latéral de la chaîne sont placés immédiatement au-dessous de l'axe dudit pignon.

Fig. 1

# Description

Dispositif de mesure de la température et/ou de prélèvement d'échantillons d'un bain d'acier liquide.

La présente invention concerne la mesure de la température et/ou le prélèvement d'échantillons dans un bain d'acier liquide en cours d'affinage dans un convertisseur.

Il est connu d'utiliser, pour effectuer ces opérations, une cartouche que l'on monte à l'extrémité d'une perche rigide apte à être introduite dans le bain de métal liquide, au fond de la cornue. La solution la plus pratique consiste à introduire la perche verticalement par l'ouverture de la cornue à travers un orifice ménagé dans la hotte surmontant la cornue. Dans cette solution, la perche est fixée à un chariot guidé verticalement et il est nécessaire de disposer d'une hauteur importante au-dessus de la cornue pour pouvoir dégager la perche de la cornue et de la hotte. Or dans certaines installations d'affinage, notamment celles du type A.O.D. (Argon-Oxygène Décarburation), le convertisseur est installé dans une halle équipée d'un pont-roulant permettant d'effectuer les différentes manutentions indispensables, en particulier le remplacement de la cornue, et la hauteur disponible n'est pas suffisante pour permettre la mise en place d'un dispositif de mesure de température et de prélèvement d'échantillons de conception classique.

Le but de la présente invention est d'apporter une solution nouvelle à ce problème et de fournir un dispositif de mesure de température et/ou de prélèvement d'échantillons conçu pour pouvoir être utilisé dans une installation d'affinage où la hauteur disponible au-dessus de la cornue est limitée.

Le dispositif objet de la présente invention est caractérisé en ce que la perche portant la cartouche a une longueur réduite de façon qu'elle ne dépasse pas la hauteur disponible au-dessus de la cornue lorsqu'elle est en position relevée et est fixée par son extrémité supérieure à une chaîne du type Galle dont les maillons sont munis de butées qui n'autorisent la chaîne à fléchir que dans un sens lorsqu'elle est rectiligne, la perche étant fixée en porte-à-faux au dernier maillon de la chaîne ,en ce que la perche et la chaîne sont suspendues à un pignon à axe horizontal sur lequel passe la chaîne et qui peut être entraîné en rotation par un moteur, et en ce que des éléments de guidage interdisant tout déplacement latéral de la chaîne sont placés immédiatement au-dessous de l'axe dudit pignon.

Cette construction permet de réduire l'encombrement en hauteur du dispositif tout en assurant le maintien de la perche en position verticale sur toute sa course et d'exercer sur la perche une poussée vers le bas qui peut être nécessaire pour la faire pénétrer dans le bain de métal liquide et/ou l'y maintenir.

Ce dispositif sera avantageusement monté sur un support déplaçable horizontalement pour permettre de dégager l'espace au-dessus du convertisseur. Le support pourra, par exemple, être constitué par le chariot portant la lance d'affinage.

D'autres caractéristiques de l'invention apparaîtront à la lecture de la description qui suit et se réfère aux dessins l'accompagnant qui montrent, à titre d'exemple non limitatif, un mode de réalisation de l'invention et sur lesquels :

La figure 1 est une vue en élévation d'une installation d'affinage équipée du dispositif objet de l'invention :

La figure 2 est une vue en plan d'une partie de la chaîne à laquelle est fixée la perche, du pignon moteur et des éléments de guidage adjacents (sur cette figure certains maillons de la chaîne ont été enlevés pour montrer les galets) ; et

La figure 3 est une vue en plan montrant la fixation de la perche sur la chaîne.

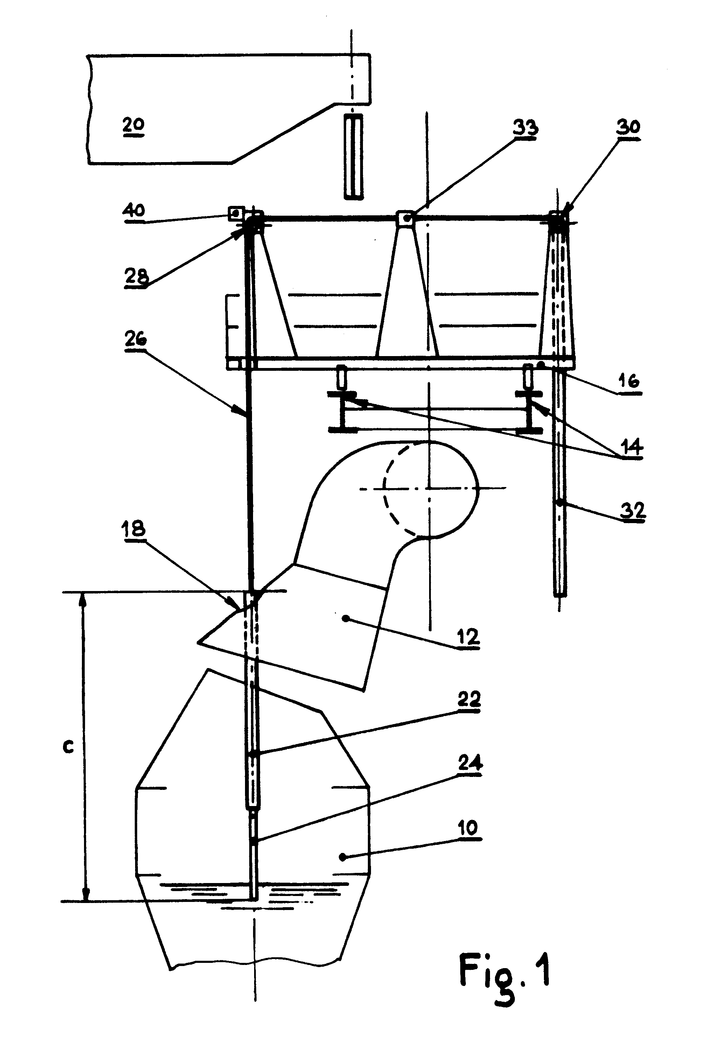

Sur la figure 1, le numéro de référence 10 désigne la cornue d'un convertisseur d'affinage qui a été représentée en coupe et en position verticale. Au-dessus de l'ouverture du convertisseur est placée une hotte 12 qui peut être écartée latéralement en pivotant autour d'un axe vertical. A un niveau supérieur sont disposés deux rails 14 sur lesquels se déplace un chariot 16 portant le dispositif conforme à l'invention pour la mesure de la température et le prélèvement d'échantillons du bain d'acier liquide contenu dans la cornue. Ce chariot porte également la lance d'affinage et le système de levage permettant d'introduire cette dernière dans la cornue, à travers une ouverture 18 pratiquée dans la hotte, et de la retirer ; ces éléments qui ne font pas partie de l'invention et ne sont pas utiles à sa compréhension n'ont pas été représentés sur les dessins.

Les rails 14 sont supportés par les piliers de la halle où se trouve le convertisseur, de même que les rails d'un pont roulant 20 desservant cette halle et utilisé pour la manutention des poches d'acier et pour le remplacement des cornues et de la lance.

Le dispositif objet de l'invention comporte une perche tubulaire 22, en acier réfractaire, à l'extrémité inférieure de laquelle est fixée une cartouche 24 dans laquelle est logée une sonde de mesure de température et/ou un récipient permettant de prélever un échantillon de métal. La cartouche est fixée à la perche de manière amovible par des moyens connus. La perche peut être refroidie par circulation d'un fluide tel que l'azote ou l'argon. L'utilisation d'un tube comme perche permet de protéger utilement les cables du thermocouple constituant l'organe de mesure de la température ; l'utilisation d'un gaz neutre de refroidissement augmente encore cette protection.

A son extrémité supérieure, la perche 22 est fixée au dernier maillon d'une chaîne 26 qui est suspendue à un pignon 28, monté sur le chariot 16, déviée horizontalement par ce pignon, puis renvoyée vers le bas par un second pignon 30 également monté sur le chariot. Le brin libre de la chaîne est logé dans un magasin vertical 32 fixé sur le chariot, et un support intermédiaire 33 est prévu pour la chaîne entre les pignons 28 et 30.

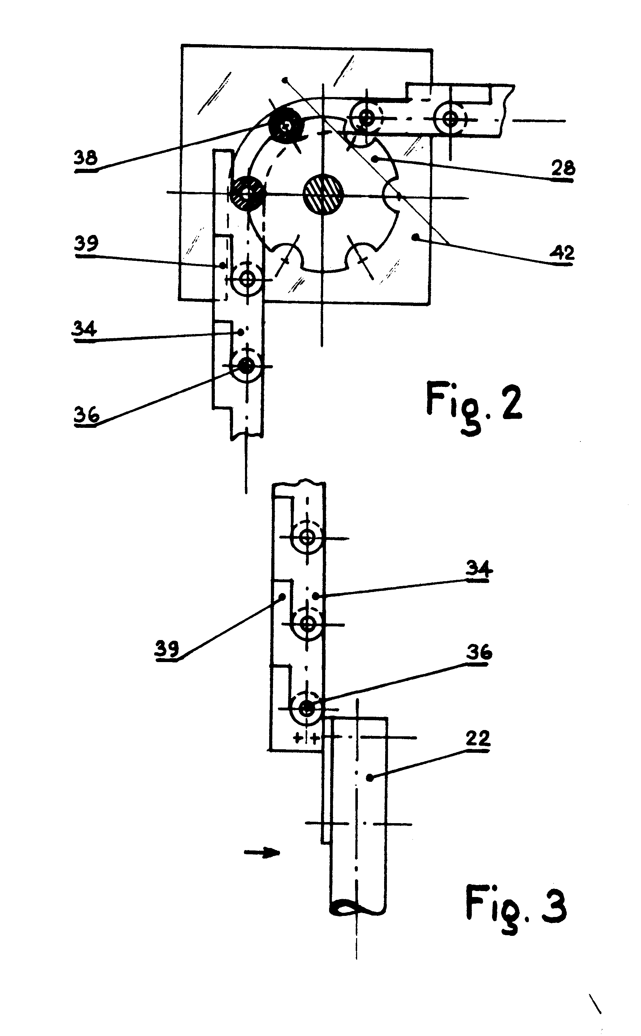

La chaîne 26 est une chaîne Galle dont les maillons 34 sont liés entre eux par des axes d'articulations 36 sur lesquels sont montés des galets 38. Les maillons de la chaîne sont munis de butées 39 qui coopèrent entre elles lorsque les maillons sont alignés pour n'autoriser la rotation de ces derniers que dans un sens seulement (sens de la flèche sur la figure 3).

La perche 22 est fixée en porte-à-faux sur le dernier maillon de la chaîne, c'est-à-dire que son centre de gravité est décalé par rapport au plan vertical contenant les axes d'articulation des maillons lorsque la chaîne est verticale, de façon à exercer un couple qui tend à faire tourner ce maillon dans le sens interdit (sens inverse de celui indiqué sur la flèche de la figure 3).

Le pignon 28 est accouplé à un groupe moto-réducteur 40 permettant de l'entraîner en rotation. Il est monté dans un carter qui est muni de deux plaques 42 profilées pour former un chemin de guidage pour la chaîne dont les galets roulent sur le bord des plaques. Le chemin comporte une portion rectiligne verticale, une portion en arc de cercle de 90° et une portion rectiligne horizontale. La portion rectiligne verticale empêche les maillons qui y sont engagés, et par conséquent l'ensemble de la chaîne et de la perche, de pivoter dans le sens interdit autour d'un des axes d'articulation se trouvant dans la partie courbe du chemin.

La perche ne pourrait donc s'écarter de la position verticale qu'en pivotant, dans le sens autorisé, autour d'un axe d'articulation des maillons. Mais, par suite du montage en porte-à-faux de la perche, le couple dû à son poids s'oppose à ce mouvement. Il faudrait donc exercer un effort non négligeable sur la perche pour la faire dévier de sa trajectoire verticale. Et dans ce cas elle reprendrait sa position d'équilibre, sans osciller, dès que l'effort cesserait, puisqu'elle ne peut pas se déplacer au-delà de cette position. Le tube constituant la perche a des parois épaisses et est suffisamment lourd pour que le couple dû à son poids excède en toutes circonstances celui dû à la pression ferrostatique s'exerçant sur la cartouche lorsqu'on la plonge dans le bain de métal.

Au lieu d'être fixée directement sur le dernier maillon de la chaîne, la perche pourrait être fixée sur une pièce attachée à ce maillon et munie de galets guidés dans un rail vertical.

Comme le pignon 28, le pignon 30 est logé dans un carter muni de plaques de guidage. Ce pignon 30 peut être relié à un moteur pneumatique ou plus simplement à une manivelle (par l'intermédiaire d'un crabot, d'un réducteur et d'un cliquet) de manière à assurer un levage de secours.

En faisant tourner le pignon 28, au moyen du moteur 40. on peut faire descendre la perche, équipée d'une cartouche, dans la cornue à travers l'ouverture 18 de la hotte. Après mesure de la température ou prélèvement d'un échantillon, la perche est remontée au-dessus de la hotte. Par déplacement du chariot, la perche peut être amenée dans une zone où la cartouche pourra être détachée de la perche et remplacée par une cartouche neuve : ces opérations peuvent être commandées manuellement ou effectuées automatiquement.

La solution de l'invention permet d'utiliser une perche dont la longueur est égale ou inférieure à la course utile C et par conséquent de réduire l'encombrement en hauteur du dispositif. ce qui n'est pas le cas des dispositifs classiques où la perche est fixée sur un chariot déplaçable verticalement et où l'enconbrement en hauteur de l'ensemble perche-chariot est nécessairement supérieur à sa course.

Il est bien entendu que toutes les modifications qui peuvent être apportées au mode de réalisation décrit par l'emploi de moyens techniques équivalents entrent dans le cadre de l'invention.

## Revendications

1. Dispositif de mesure de la température et/ou de prélèvement d'échantillons d'un bain d'acier liquide dans la cornue (10) d'un convertisseur constitué par une cartouche (24) fixée à l'extrémité inférieure d'une perche (22) apte à être introduite verticalement dans le bain par l'ouverture de la cornue, caractérisé en ce que la perche (22) est fixée par son extrémité supérieure à une chaîne Galle (26) dont les maillons (34) sont munis de butées (39) qui n'autorisent la chaîne qu'à fléchir dans un sens lorsqu'elle est rectiligne, en ce que la perche est fixée en porte-à-faux au dernier maillon de la chaîne, en ce que la perche et la chaîne sont suspendues à un pignon (28) à axe horizontal sur lequel passe la chaîne et qui peut être entraîné en rotation par un moteur (40). et en ce que des éléments de guidage (42) interdisant tout déplacement latéral de la chaîne sont placés immédiatement au-dessous de l'axe dudit pignon.

2. Dispositif selon la revendication 1, caractérisé en ce que ledit pignon est monté sur un support (16) déplaçable horizontalement.

3. Dispositif selon la revendication 1 ou 2. caractérisé en ce que la perche (22) est constituée par un tube refroidi par circulation d'un gaz neutre.

Fig. 1

Fig. 2

38
28
39
42
34
36

Fig. 3

34
39
36
22

Office européen
des brevets

# RAPPORT DE RECHERCHE EUROPEENNE

Numéro de la demande

EP 86 40 2073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | CH-A- 486 015 (GESELLSCHAFT ZUR FÖRDERUNG DER FORSCHUNG AN DER EIDGENÖSSISCHEN TECHNISCHEN HOCHSCHULE, ZÜRICH) * Titre; figures 1,2; colonne 2, ligne 32 - colonne 4, ligne 14 * | 1 | G 01 K 1/14 G 01 N 1/12 C 21 C 5/46K |
| | --- | | |
| X,Y | CH-A- 518 611 (PROTON AG, ZUG) * Titre; figures 1-4; colonne 3, ligne 39 - colonne 5, ligne 4 * | 1,3 | |
| | --- | | |
| Y | US-A-3 896 674 (W.A. KOLB) * Titre; figures 1,2; colonne 2, ligne 66 - colonne 3, ligne 8; colonne 4, lignes 13-40 * | 1,3 | |
| | --- | | |
| A | GB-A-1 322 261 (ASHMORE, BENSON, PEASE & CO. LTD.) * Titre; figures 1-4; page 2, lignes 42-63 * | 1,2 | |
| | ----- | | |

DOMAINES TECHNIQUES RECHERCHES (Int. Cl.4)

G 01 K
G 01 N
C 12 C
F 16 G

Le présent rapport de recherche a été établi pour toutes les revendications

| Lieu de la recherche | Date d'achèvement de la recherche | Examinateur |
|---|---|---|
| LA HAYE | 16-12-1986 | VISSER F.P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82